# EUROPEAN PATENT SPECIFICATION

(11) **EP 2 466 842 B1**
(45) Date of publication and mention of the grant of the patent: **10.10.2018**
(21) Application number: 10807944.3
(22) Date of filing: 02.08.2010
(51) Int. Cl.: H04L 29/06

(54) **METHOD AND SERVICE DEVICE FOR PRIVATE CALL OF CONFERENCE IN IP MULTIMEDIA SUBSYSTEM**
VERFAHREN UND DIENSTVORRICHTUNG FÜR PRIVATKONFERENZRUFE IN EINEM IP-MULTIMEDIA-SUBSYSTEM
PROCÉDÉ ET DISPOSITIF DE SERVICE POUR TÉLÉCONFÉRENCE PRIVÉE DANS UN SOUS-SYSTÈME MULTIMÉDIA IP

(30) Priority: 12.08.2009 CN 200910091219
(43) Date of publication of application: 20.06.2012
(73) Proprietor: ZTE Corporation, Shenzhen, Guangdong 518057 (CN)
(72) Inventor: YANG, Qiang, Shenzhen Guangdong 518057 (CN); WANG, Chen, Shenzhen Guangdong 518057 (CN); TANG, Fei, Shenzhen Guangdong 518057 (CN)
(74) Representative: Pallini Gervasi, Diego
(86) International application number: PCT/CN2010/075626
(87) International publication number: WO 2011/017999

(56) References cited:
- WO-A2-2006/034067
- WO-A2-2006/034067
- CN-A- 101 110 686
- CN-A- 101 471 806
- US-A1- 2003 035 527
- US-A1- 2005 078 613
- US-A1- 2007 091 830
- US-B1- 7 058 168

## Description

### TECHNICAL FIELD

The present application belongs to the field of communications and particularly relates to a method and a service device for realizing a private call during a conference in an IP multimedia subsystem (i.e. IP Multimedia Core Network Subsystem, IMS).

### BACKGROUND

An IMS system is an IP based network architecture proposed by 3rd Generation Partnership Project (3GPP) organization, constructing an open and flexible service environment. The IMS system supports multimedia application and provides abundant multimedia services for subscribers.

Conference is a service carried out in an IMS system, which involves a conference presider presiding over a conference and conference members participating in the conference, and in which a plurality of conference members can synchronously communicate with the conference presider, that is, a conference member can be heard by the other conference members and the conference presider, and the conference presider can be heard by the conference members.

In the prior art, a conference presider can add, kick out or isolate a conference member and do other operations without hanging up, but cannot make a private call with a certain conference member while keeping participating in the conference with the other conference members. A private call between a conference presider and a conference member refers to a private call that is made between the conference presider and a specified conference member without interrupting the conference of the other conference members.

As a conference presider cannot make a private call with a certain conference member without giving a notice to the other conference members or influencing the conference of the other conference members during a conference, in the prior art, a conference presider can neither prompt or warn a certain conference member nor get support or prompt from a certain conference member.

US2003/035527A1 discloses a conference call tunneling method and apparatus.

US7058168B1 discloses a method and system for participant control of privacy during multiparty communication sessions.

US2005/078613 discloses a system and method for establishing parallel conversation thread during a remote collaboration.

US2007/091830 discloses a method and apparatus for making sidebar calls.

WO2006/034067 discloses a system and method for conducting a dispatch multi-party call and sidebar session.

### SUMMARY

The present invention is defined by the method of claim 1 and the apparatus of claim 4. Further details are defined in the dependent claims.

In order to address the problems above, it is an object of the present application to provide a method and a service device for realizing a private call between a conference presider and a conference member during a conference in an IP multimedia subsystem.

In order to achieve the purpose above, the present application provides a method for realizing a private call during a conference in an IP multimedia subsystem, which includes:
a service device receives a first request message from a first communication device, wherein the first request message is sent by the first communication device to request a private call with a second communication device;
the service device modifies conference media of a communication device having participated in the conference within the first and the second communication devices according to the received first request message;
and after modifying the conference media, the service device establishes a private call between the first and the second communication devices.

The first communication device may be a communication device at a conference presider side, and the second communication device is a communication device at a member side.

After the service device receives the first request message from the first communication device, the method may further include:
the service device forwards the first request message to the second communication device;
the second communication device sends a second request message to the service device to request a private call with the first communication device;
and after receiving the second request message, the service device modifies conference media of the communication device having participated in the conference within the first and the second communication devices according to the received second request message.

The first communication device may be a communication device at a member side, and the second communication device is a communication device at the conference presider side.
the service device modifying conference media of the communication device having participated in the conference within the first and the second communication devices may include:
the service device shields the first and the second communication devices from a communication among the other communication devices participating in the conference; and/or
the service device shields the other communication devices participating in the conference from a communication between the first and the second communication devices.

The service device receives a request message that is sent by the first communication device to request an exit from the private call with the second communication device;
and the service device modifies conference media of the first and the second communication devices to make the first and the second communication devices return to the current conference.

If the first and the second communication devices are not in the same conference, the method may further include:
the service device sends a calling message to the second communication device; and
after the second communication device responds the call from the service device, the service device establishes a private call between the first and the second communication devices.

The method may further include:
the service device receives the exit request message from the first communication device;
and after accepting the exit request of the first communication device, the service device releases the second communication device, and modifies conference media of the first communication device to make the first communication device return to the current conference.

A service device for realizing a private call during a conference in an IP multimedia subsystem includes a message receiving module, a processing module and a private call setting module, wherein
the message receiving module is arranged for receiving a first request message that is sent by a first communication device to request a private call with a second communication device;
the processing module is arranged for modifying conference media of a communication device having participated in the conference within the first and the second communication devices according to the received first request message;
and the private call setting module is arranged for establishing a private call between the first and the second communication devices after the conference media is modified.

The service device may further include a message forwarding message for forwarding the first request message to the second communication device;
the message receiving module may be further arranged for receiving a second request message from the second communication device;
and the processing module may be further arranged for modifying conference media of the communication device having participated in the conference within the first and the second communication devices according to the received second request message.

The service device may further include:
a content shielding module for shielding the first and the second communication devices from a communication among the other communication devices participating in the conference, and/or shielding the other communication devices participating in the conference from a communication between the first and the second communication devices.

The message receiving module may be further arranged for receiving a request message that is sent by the first communication device to request an exit from the private call with the second communication device;
and the processing module may be further arranged for modifying conference media of the first and the second communication devices according to the received request message requesting for an exit from the private call with the second communication device to make the first and the second communication devices return to the current conference.

The service may further include:
a calling module for sending a calling message to the second communication device in the case where the first and the second communication devices are not in the same conference;
the message receiving module may be further arranged for receiving a response made by the second communication device to the call message;
and the processing module may be further arranged for establishing a private call between the first and the second communication devices according to the received response.

The message receiving module may be further arranged for receiving a request message that is sent by the first communication device to request an exit from the private call;
and the processing module may be further arranged for releasing the second communication device when the request of the first communication device for an exit from the private call is accepted, and modifying conference media of the first communication device to make the first communication device return to the current conference.

In the present application, after a request for a private call is received, conference media of the conference presider and/or the conference members is modified, thus, the conference presider or a conference member can conveniently make a private call with a certain conference member or the conference presider freely or as needed.

### BRIEF DESCRIPTION OF THE DRAWINGS

Fig. 1 is a flow chart of a method for realizing a private call during a conference in an IMS system according to an embodiment of the present application;
Fig. 1A is a flow chart illustrating a method for a conference presider to apply for a private call with a user according to the present application;
Fig. 1B is a flow chart illustrating a method for a conference member to apply for a private call with a conference presider according to the present application;
Fig. 2 is a flow chart of a method for a conference presider to apply for a private call with a conference member according to an embodiment of the present application;
Fig. 3 is a flow chart of a conference presider applying for a private call with a non-conference member according to an embodiment of the present application;
Fig. 4 is a flow chart of a certain conference member applying for a private call with a conference presider according to an embodiment of the present application; and
Fig. 5 is a schematic diagram illustrating the structure of a service device according to an embodiment of the present application.

### DETAILED DESCRIPTION

In an embodiment of the present application, a service device first receives a first request message that is sent by a first communication device serving as a conference presider to request a private call with a second communication device, then modifies conference media of a communication device having participated in the conference within the first and the second communication devices according to the received first request message, and at last establishes a private call between the first and the second communication devices after the conference media is modified.

In order to provide a better understanding of the objects, technical scheme and advantages of the present application, the present application is further described below in detail with reference to accompanying drawings and specific embodiments. Here, the exemplary embodiments of the present application and the description thereof are merely provided for explaining the present application but not for limiting the present application.

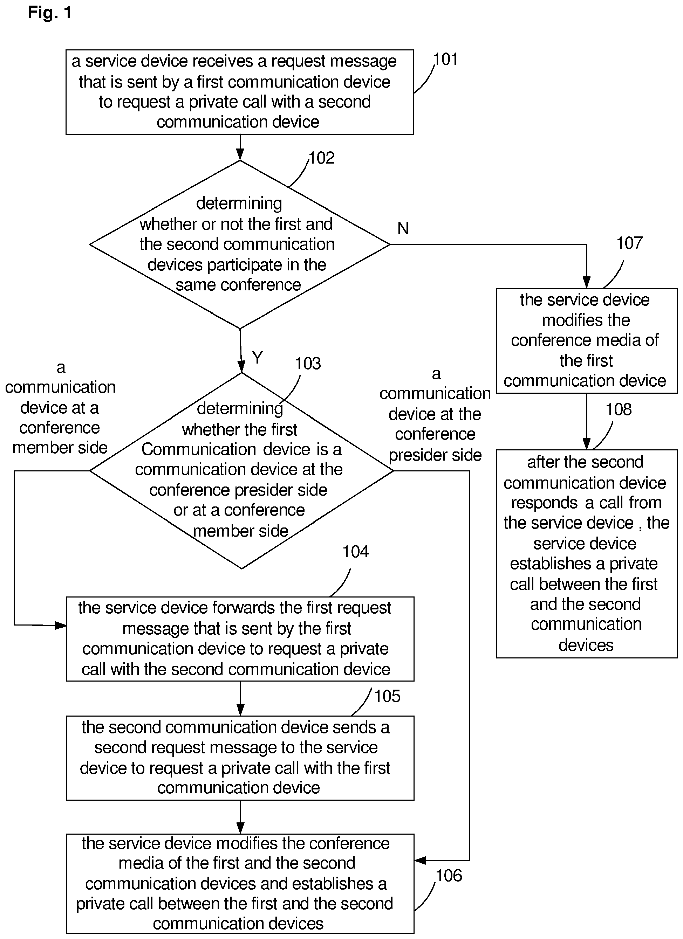

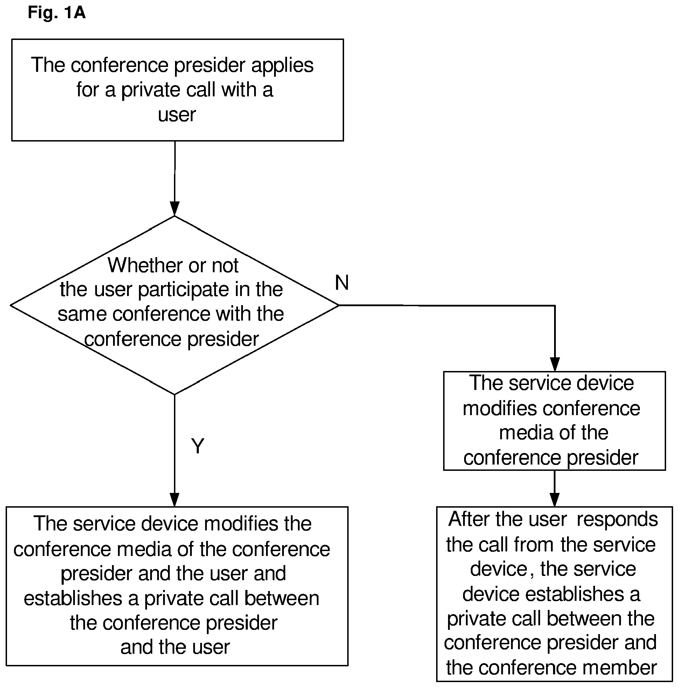

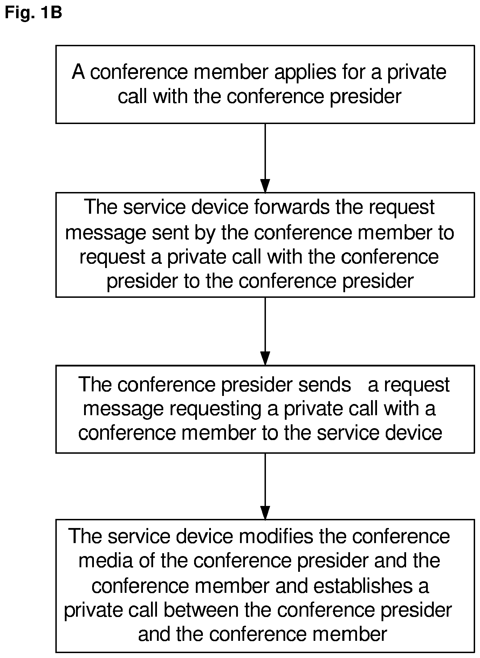

Fig. 1 is a flow chart of a method for realizing a private call during a conference in an IMS system according to the present application, as shown in Fig. 1, the method for realizing a private call during a conference in an IMS system specifically comprises the following steps:
Step 101: a service device receives a first request message that is sent by a first communication device to request a private call with a second communication device;
   the first communication device is a communication device participating in a conference with other communication devices, and the second communication device is a communication device participating in the same conference or another conference or a non-conference communication device;
Step 102: the service device determines whether or not the first and the second communication devices participate in the same conference, if so, Step 103 is executed, otherwise, Step 107 is executed;
   after receiving the first request message, the service device analyzes the first request message and obtains identifiers of the first and the second communication devices, then determines, through an inquiry, whether or not the identifiers of the first and the second communication devices are included in a identifier list of the communication devices participating in the same conference, if so, determines the first and the second communication device are in the same conference, otherwise, determines the first and the second communication devices are not in the same conference;
   In this embodiment, the identifier of a communication device may be the number or IP address of the communication device, and whether or not the first and the second communication devices are in the same conference can be determined in another way to which the present application is not limited;
Step 103: a determination is made on whether the first communication device is a communication device at a conference presider side or at a conference member side, and the flow proceeds to Step 106 if the first communication device is a communication device at the conference presider side or to Step 104 if the first communication device is a communication device at a conference member side;
   similarly, whether or not the first communication device is a communication device at the conference presider side can be determined according to the identifier of the first communication device, and if the first communication device is a communication device at the conference presider side, the service device modifies conference media of the first and the second communication devices according to the first request message received in Step 101, at this moment, the first and the second communication devices have joined in the same conference;
Step 104: the service device forwards the first request message that is sent by the first communication device to request a private call with the second communication device to the second communication device, then, the flow proceeds to Step 105;
Step 105: the second communication device sends a second request message to the service device to request a private call with the first communication device, then, the flow proceeds to Step 106;
Step 106: the service device modifies conference media of the first and the second communication devices and establishes a private call between the first and the second communication devices, and then, the flow is ended;
Step 107: the service device modifies conference media of the first communication device and then the flow proceeds to Step 108;
   at this moment, the first communication device may be a communication device at the presider side or a conference member side; in embodiment 2, only the case is described in which the first communication device is a communication device at the conference presider side;
and Step 108: after the second communication device responds to a call from the service device, the service device establishes a private call between the first and the second communication devices.

Before the Step 108 is executed, the service device sends a call request to the second communication device according to the identifier of the second communication device included in the first request message.

In accordance with the embodiment above, a method for a conference presider applying for a private call with a user is shown in Fig. 1A, and a method for a conference member applying for a private call with the conference presider is shown in Fig. 1B.

It can be seen from the embodiment above that, after a request for a private call is received, conference media of the conference presider and/or a conference member is modified, thus, the conference presider or the conference member can conveniently make a private call with a certain conference member or the conference presider freely or as needed.

In the present application, a private call that is carried out between a conference presider and a conference member or a non-conference member is described, which is divided into the following three cases:
Case 1: the conference presider applies for a private call with a certain conference member, and after the private call is ended, the conference presider and the conference member get back into the conference;
Case 2: the conference presider applies for a private call with a certain user who is not in the conference (a non-conference member) and gets back into the conference and synchronously releases the user after the private call is completed;
Case 3: a conference member applies for a private call with the conference presider, and after the private call is ended, the conference presider and the conference member get back into the conference.

The three cases above are respectively described in detail below based on three specific embodiments.

### Embodiment 1

In the following description, it is assumed that a conference carried out in an IMS system involves: a conference presider UE-A, conference members UE-B, UE-C and UE-D, and that the UE-A, the UE-B, the UE-C and the UE-D have participated in the conference, the flow of joining in the conference can be implemented through a prior art. Certainly, other members desiring to participate in the conference can join in the conference using an existing technology.

In this embodiment, the conference presider applies for a private call with a certain conference member, and after the private call is ended, the conference presider and the conference member get back into the conference.

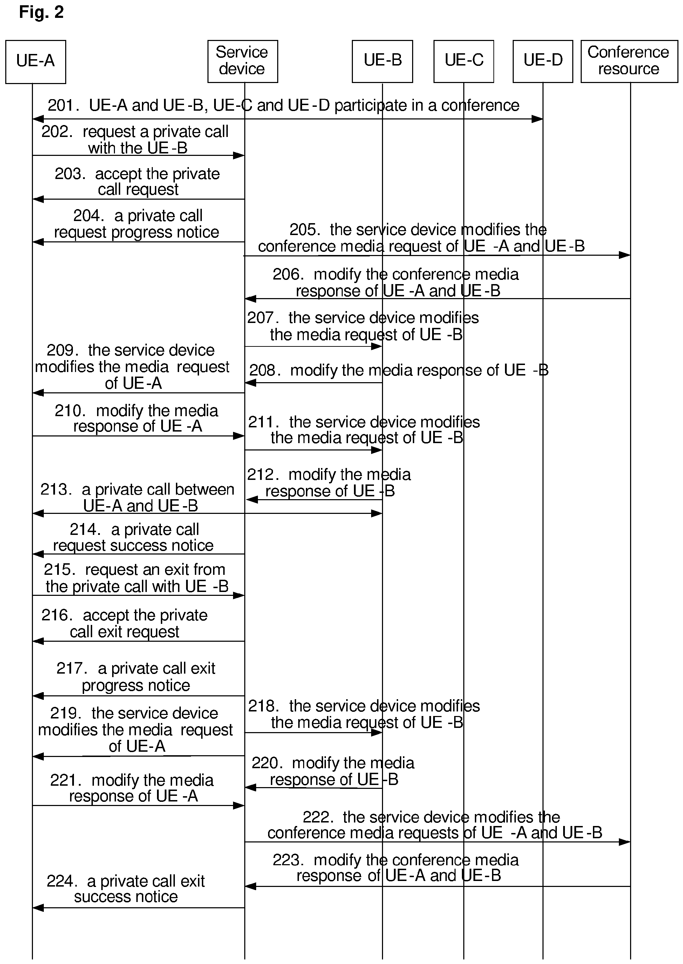

Fig. 2 is a flow chart of the conference presider applying for a private call with a conference member according to this embodiment, as shown in Fig. 2, the application of the conference presider for a private call with a conference member according to this embodiment specifically comprises the following steps:
Step 201: the UE-A and conference numbers UE-B, UE-C and UE-D participate in a conference;
   in this step, the UE-A can add the UE-B, the UE-C and the UE-D in the conference using an existing technology;
Step 202: the UE-A sends a request message to a service device to request a private call with the UE-B;
   the private call request message may be a message 'REFER', wherein the parameter 'method' in the header field 'Refer-To' of the message 'REFER' may be 'INVITE', moreover, the identifier of the UE-B with which the UE-A desires to establish a private call is included in the message 'REFER', the identifier may be the telephone number or the IP address of the UE-B, to which the present application is certainly not limited;
   the service device can determine the request message is a request message sent by the UE-A to request a private call with the UE-B based on the fact that the user corresponding to the identifier of the called conference member included in the message 'REFER' has participated in the conference and that the parameter 'method' is 'INVITE';
   in this embodiment, an application for a private call and an application for an exit from a private call can both employ the message 'REFER' defined in RFC 3515, thus, only the conference presider and the conference member making a private call with the conference presider are required to be supportive to 'REFER' and 'NOTIFY' message processing, the other conference members can be unsupportive to the 'REFER' and 'NOTIFY' message processing or be non-SIP (Session Initialization Protocol) users;
   definitely, a specific message sent by the UE-A to request a private call with a conference member is not limited to the aforementioned message 'REFER', and the specific content of the message is not limited to the parameter 'method' of the message 'REFER', any appropriate message can be used as long as it can be used to inform the service device of the intention of the conference presider and to notify the conference presider of the processing carried out by the service device on the request, for instance, the parameter 'method' can be expended so that the service device and the conference presider can make a private call request or a private call exit request and other determinations conveniently according to a clearer instruction;
Step 203: the service device sends a private call request acceptation message to the UE-A;
Step 204: the service device sends the UE-A a progress notice indicative of the progress achieved by the service device in realizing a private call between the UE-A and the UE-B;
   that is, the service device informs the UE-A that the service device has started the processing on the private call between the UE-A and the UE-B; the progress notice may be a message 'NOTIFY', the message body of which is 100 Trying;
Step 205: the service device sends a conference resource a request for modifying conference media of the UE-A and the UE-B;
Step 206: the conference resource returns the service device a response indicative of a modification on the conference media of the UE-A and the UE-B;
   by executing Steps 205 and 206, the conference resource can modify user media of the UE-A and the UE-B and corresponding conference media according to the indication of the private call request message and the processing logic of the service device to forbid the UE-A and the UE-B to send information to the conference, that is, the service device shields the other conference members from the communication between the UE-A and the UE-B, and/or forbids the conference to send information to the UE-A and the UE-B, that is, shields the UE-A and the UE-B from the communication among the other conference members;
Steps 207-213: the service device modifies the conference media of the UE-A and the UE-B and establishes a private call between the UE-A and the UE-B;
Step 214: the service device sends the UE-A a success message indicative of the successful implementation of the private call between the UE-A and the UE-B;
   the service device informs the UE-A that the service device has successfully realized the private call between the UE-A and the UE-B; the notice message may be a message 'NOTIFY', the message body of which is 200 OK;
Step 215: the UE-A sends a request message to the service device to request an exit from the private call with the UE-B;
   after the private call between the UE-A and the UE-B is ended, the UE-A sends a request message to the service device to request an exit from the private call, the request message may be a message 'REFER', the parameter 'method' in the header field 'Refer-To' of the message 'REFER' may be 'INVITE', the identifier of the UE-B is contained in the message, and similarly, the identifier of the UE-B may be the telephone number or the IP address of the UE-B; then, the service device can determine the message is a message sent by the UE-A to request an exit from the private call with the UE-B based on the fact that the user corresponding to the identifier of the called conference member in the message 'REFER' is the UE-B which is in a private call with the UE-A and that the parameter 'method' is 'INVITE';
Step 216: the service device sends the UE-A a message indicating that the UE-A and the UE-B are allowed to exit the private call;
   after receiving the private call exit request message, the service device sends a private call exit request acceptation message to the UE-A, wherein the acceptation message can be set to be 202;
Step 217: the service device sends the UE-A a progress message indicative of the private call exit progress of the UE-A and the UE-B;
   that is, the service device informs the UE-Athat the service device has already started the processing on the private call exit of the UE-A and the UE-B; the progress message may be a message 'NOTIFY', the message body of which is 100 Trying;
Step 218-Step 224: the service device modifies user media of the UE-A and the UE-B and corresponding conference media, and resumes the communication between the UE-A and other conference members as well as the communication between the UE-B and other conference members so that the UE-A and the UE-B can get back into the conference to communicate with the UE-C and the UE-D normally; and
Step 225: the service device sends the UE-A a success message indicating that the UE-A and the UE-B has successfully exited the private call and gotten back into the conference;
   in this step, the service device can inform the UE-Athat the service device has successfully enabled the UE-A and the UE-B to exit the private call and get back into the conference, wherein the notice message may be a message 'NOTIFY', the message body of which is 200 OK.

By executing Steps 201-224, a private call can be realized between the UE-A and a certain conference member, moreover, the UE-A and the certain conference member are allowed to get back into the conference after the private call is completed.

### Embodiment 2

In the description below, it is assumed that a conference carried out in an IMS system involves: a conference presider UE-A and conference members UE-B and UE-C, and that the UE-A, the UE-B and the UE-C have participated in the conference, the flow of joining in the conference can be realized by a prior art. Certainly, other members desiring to participate in the conference can join in the conference using an existing technology.

In this embodiment, the conference presider applies for a private call with a certain non-conference member and gets back into the conference and synchronously releases the non-conference member after the private call is ended;

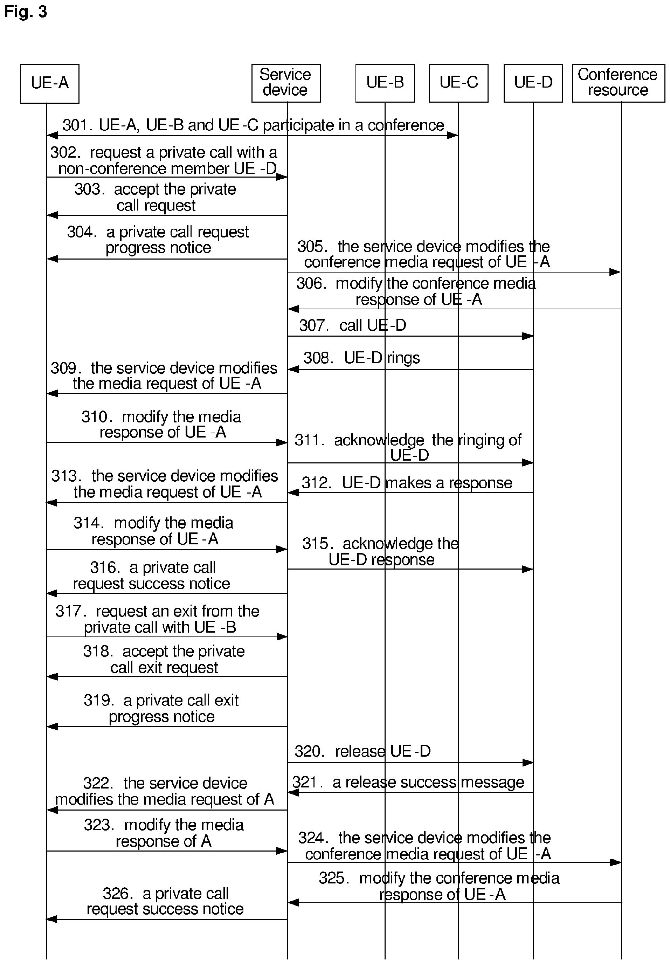

Fig. 3 is a flow chart of the conference presider applying for a private call with a non-conference member according to this embodiment, as shown in Fig. 3, the application of the conference presider for a private call with a non-conference member specifically comprises the following steps:
Step 301: the conference presider UE-A and the UE-B and UE-C participate in a conference;
   in this step, the UE-A can add the UE-B and the UE-C in the conference using an existing technology;
Step 302: the UE-A sends a message to a service device to request a private call with a non-conference member UE-D;
   the private call request message may be a message 'REFER', the parameter 'method' in the header field 'Refer-To' of the message 'REFER' may be 'INVITE', moreover, the identifier of the UE-D (non-conference member) with which the UE-A desires to establish a private call is contained in the message 'REFER', the identifier may be the telephone number or the IP address of the UE-D, to which the present application is certainly not limited.
   the service device can determine the message is a message sent by the UE-A to request a private call with the UE-D based on the fact that the user UE-D corresponding to the identifier of the called user contained in the message 'REFER' is absence from the conference, there is no field 'replace', and the parameter 'method' is 'INVITE';
   in this step, the specific message sent by the UE-A to request a private call with the UE-D is not limited to the message 'REFER', and the specific content of the message is not limited to the parameter 'method' of the message 'REFER', any appropriate message can be used as long as it can be used to inform the service device of the intention of the conference presider or the conference member and to notify the conference presider or the conference member of the processing carried out by the service device on the request, for instance, the parameter 'method' can be expanded so that the service device and the conference presider can make a determination on whether or not to request a private call according to a clearer instruction;
Step 303: the service device sends the UE-A an acceptation message indicating that the request for a private call between the UE-A and the UE-D is accepted;
Step 304: the service device sends the UE-A a progress message indicative of the progress achieved on the private call carried out between the UE-A and the UE-D;
   the service device informs the UE-A that the service device has already started the processing on the private call between the UE-A and the UE-D; the private call progress message may be a message 'NOTIFY', the message body of which is 100 Trying;
Steps 305-306: the service device modifies user media of the UE-A and corresponding conference media according to the indication of the message requesting for a private call between the UE-A and the UE-D and the processing logic of the service device, forbids the UE-A to send information to the conference (that is, shields the other conference members from the communication between the UE-A and the UE-D) and/or forbids the conference to send information to the UE-A (that is, shields the UE-A from the communication among the other conference members);
Steps 307-Step 315: the service device establishes a private call between the UE-A and the UE-D;
Step 316: the service device sends the UE-A a message indicating that a private call is successfully realized between the UE-A and the UE-D;
   that is, the service device informs the UE-A that the service device has successfully realized a private call between the UE-A and the UE-D; the notice message may be a message 'NOTIFY', the message body of which is 200 OK;
Step 317: the UE-A sends a message to the service device to request an exit from the private call between the UE-A and the UE-D;
   the UE-A sends a request message to the service device to request to release the UE-D and get back into the conference, the request message may be a message 'REFER', wherein the parameter 'method' in the header field 'Refer-To' of the message 'REFER' may be 'BYE', the identifier of the UE-D is contained in the message 'REFER', the identifier may be the telephone number or the IP address of the UE-D, to which the present application is certainly not limited;
   the service device can determine the request message is a request message sent by the UE-A to request to release the UE-D and get back into the conference based on the fact that the user corresponding to the identifier of the called conference member contained in the message 'REFER' is in a private call with the UE-A and that the parameter 'method' is 'BYE';
Step 318: the service device sends a private call exit acceptation message to the UE-A;
   in this step, the service device returns a response message to the UE-A in response to the request for releasing the UE-D and making the UE-A get back into the conference;
Step 319: the service device sends a private call exit progress notice to the UE-A;
   the service device sends a progress message to the UE-A to indicate the progress achieved by the service device in releasing the UE-D and making the UE-A get back into the conference and notifies the UE-A that the service device has started the processing on releasing the UE-D and enabling the UE-A to get back into the conference, wherein the progress message may be a message 'NOTIFY', the message body of which is 100 Trying;
Step 320-325: the service device releases the UE-D, modifies user media of the UE-A and corresponding conference media, and establishes a communication between the UE-A and the conference, that is, allows the UE-A to get back into the conference to make a normal communication with the other conference members; and
Step 326: the service device sends a success message to the UE-A to indicate the UE-D has been released and the UE-A has gotten back into the conference, and notifies the UE-A that the service device has successfully released the UE-D and made the UE-A gotten back into the conference, wherein the success message may be a message 'NOTIFY', the message body of which is 200 OK.

In this embodiment, a private call can be established between a conference presider and a non-conference member and can be released in many ways, depending on the specific control strategies of different terminals and service devices; and by executing Steps 301-306, the conference presider can apply for a private call with a certain non-conference user and get back into the conference and release the user after the private call is completed.

### Embodiment 3

In the following description, it is assumed that a conference carried out in an IMS system involves: a conference presider UE-A, conference members UE-B, UE-C and UE-D, and that the UE-A, the UE-B, the UE-C and the UE-D have participated in the conference, the flow of joining in the conference can be realized through a prior art. Certainly, other members desiring to participate in the conference can join in the conference using an existing technology.

In this embodiment, a conference member applies for a private call with a conference presider, and after the private call is ended, the conference presider and the conference member get back into the conference.

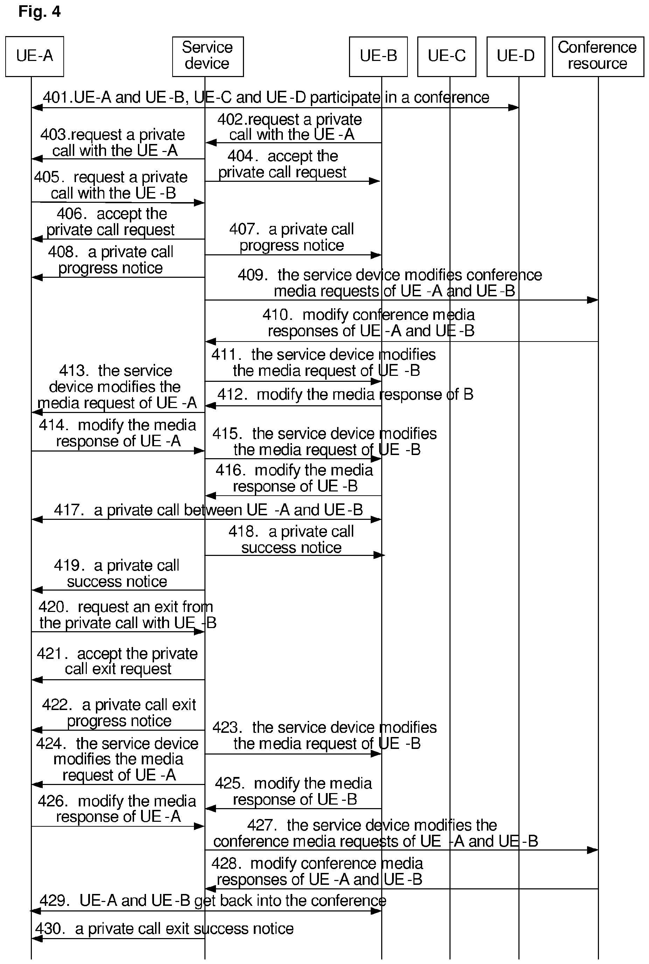

Fig. 4 is a flow chart of a conference member applying for a private call with a conference presider according to this embodiment, as shown in Fig. 4, the application of a conference member for a private call with a conference presider according to embodiment 3 specifically comprises the following steps:
Step 401: the UE-A and conference the UE-B, the UE-C and the UE-D participate in a conference;
   in this step, the UE-A can add the UE-B, the UE-C and the UE-D in the conference using an existing technology;
Step 402: the UE-B sends a message to a service device to request a private call with the UE-A;
   the private call request message may be a message 'REFER', wherein the parameter 'method' in the header field 'Refer-To' of the message 'REFER' may be 'INVITE', moreover, the identifier of the UE-A is contained in the message 'REFER', the identifier may be the telephone number or the IP address of the UE-A, to which the present application is certainly not limited;
   the service device can determine the request message is a request message sent by the UE-B to request a private call with the UE-A based on the fact that the identifier of the called user contained in the message 'REFER' is the user identifier corresponding to the UE-A and that the parameter 'method' is 'INVITE';
Step 403: the service device forwards the private call request message sent by the UE-B to the UE-A;
   in this step, the service device determines, according to a local strategy, that the UE-B has a right to make a private call with the UE-A, and then forwards the private call request message to the UE-A, wherein the request message may be a message 'REFER';
Step 404: the service device sends an acceptation message to the UE-B to indicate that the request for a private call with the UE-A is accepted;
Step 405: the UE-A sends a request message to the service device to request a private call with the UE-B;
   that is, after receiving the request message in the Step 403, the UE-A confirms that a private call with the UE-B is allowed, and then sends a message to the service device to request a private call with the UE-B, wherein the request message may be a message 'REFER', the parameter 'method' in the header field 'Refer-To' of the message 'REFER' may be 'INVITE', the identifier of the UE-B with which the UE-A desires to establish a private call is contained in the message 'REFER', the identifier may be the telephone number or the IP address of the UE-B, to which the present application is certainly not limited;
   in this step, the specific message sent by the UE-B to request a private call with the UE-A is not limited to the message 'REFER', and the specific content of the message is not limited to the parameter 'method' of the message 'REFER', any appropriate message can be used as long as it can be used to inform the service device of the intention of the conference presider or the conference member and to notify the conference presider or the conference member of the processing carried out by the service device on the request, for instance, the parameter 'method' can be expended so that the service device and the conference presider can make a private call request or a private call exit request and other determinations conveniently according to a clearer instruction;
   the service device can determine the request message is a request message sent by the UE-A to request a private call with the UE-B based on the fact that the user corresponding to the identifier of the called conference member contained in the message 'REFER' has participated in the conference and that the parameter 'method' is 'INVITE';
Step 406: the service device sends the UE-A an acceptation message indicating that the request for a private call with the UE-B is accepted;
Step 407: the service device sends the UE-B a progress message indicating the progress of the UE-B making a private call with the UE-A, wherein the progress message, which is used to inform the UE-B that the service device has started processing the private call of the UE-B with the UE-A, may be a message 'NOTIFY', the message of which is 100 Trying;
Step 408: the service device sends the UE-A a progress message indicating the progress of the UE-A making a private call with the UE-B, wherein the progress message, which is used to inform the UE-A that the service device has started processing the private call of the UE-A with the UE-B, may be a message 'NOTIFY', the message of which is 100 Trying;
Steps 409-410: user media of the UE-A and the UE-B and corresponding conference media are modified according to the indication of the message requesting for a private call between the UE-A and the UE-B and the processing logic of the service device to forbid the UE-A and the UE-B to send information to the conference (that is, to shield the other conference members from the communication between the UE-A and the UE-B) and/or forbid the conference to send information to the UE-A and the UE-B (that is, shield the UE-A and the UE-B from the communication among the other conference members);
Steps 411-417: the service device modifies conference media of the UE-A and the UE-B to establish a private call between the UE-A and the UE-B;
Step 418: the service device sends the UE-B a success message indicating the successful realization of a private call between the UE-B and the UE-A and informs the UE-B that the service device has successfully realized a private call between the UE-B and the UE-A;
   wherein the notice message may be a message 'NOTIFY', the message body of which is 200OK;
Step 419: the service device sends the UE-A a success message indicating the successful realization of a private call between the UE-A and the UE-B to inform the UE-A that the service device has successfully realized a private call between the UE-A and the UE-B;
   similarly, the notice message may be a message 'NOTIFY', the message body of which is 200OK;
Step 420: the UE-A sends a request message to the service device to request an exit of the UE-B and itself from the private call;
   wherein the request message may be a message 'REFER', the parameter 'method' in the header field 'Refer-To' of the message 'REFER' may be set to be 'INVITE', the identifier of the UE-B is contained in the message 'REFER', the service device can determine the message is a message which is sent by the UE-A to request to make the UE-B and itself exit from the private call and get back into the conference based on the fact that the user corresponding to the identifier of the called conference member contained in the message 'REFER' is participating in a private call with the UE-A and that the parameter 'method' is 'INVITE';
Step 421: the service device sends the UE-A an acceptation message indicating that the private call exit request is accepted;
Step 422: the service device sends the UE-A a progress message indicating the progress achieved by the service device in making the UE-A and the UE-B exit the private call and informs the UE-A that the service device has started the processing on the private call exit of the UE-A and the UE-B, wherein the progress message may be a message 'NOTIFY', the message of which is 100 Trying;
Steps 423-429: the service device modifies conference media of the UE-A and the UE-B and corresponding conference media to enable the UE-A and the UE-B to get back into the conference; and
Step 430: the service device sends the UE-A a success message indicating that the UE-B and the UE-A have successfully exited from the private call and gotten back into the conference to inform the UE-A that the service device has successfully make the UE-A and the UE-B exit from the private call and get back to the conference, wherein the progress message may be a message 'NOTIFY', the message of which is 200 OK.

In this embodiment, a determination on whether to send a private call request message directly from the UE-B to the UE-A or send a signal reception prompting sound to the UE-A under the control of the service device to prompt the UE-A to make a determination on whether or not to allow the private call is made according to the control strategy of the service device and the processing capacity of the UE-A; in the embodiment shown in Fig. 4, the request for an exit from the private call with the UE-A can also be initiated by the UE-B.

In order to realize the above-mentioned method embodiment, a service device for realizing a private call during a conference in an IP multimedia subsystem is also provided in another embodiment of the present application. Additionally, it should be noted that as the following embodiment is provided to realize the above-mentioned method embodiment, the modules in the service device are respectively arranged for realizing the steps of the above method, however, the present application is not limited to the following embodiment, and any other service device for realizing the above method and the modules thereof are within the protection scope of the present application. Moreover, in the following description, the content that can be found in the above-described method is omitted to make the present application brief.

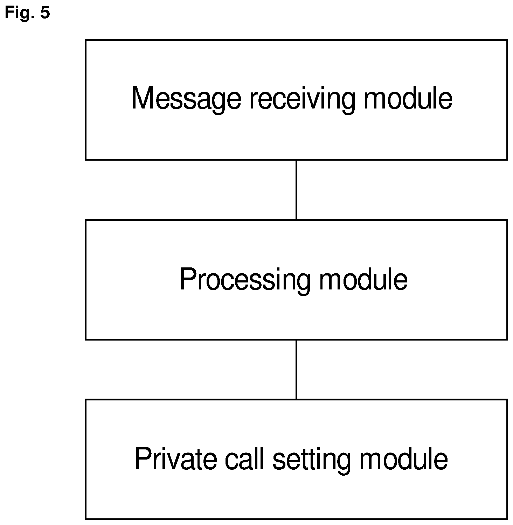

Fig. 5 is a schematic diagram illustrating the structure of a service device according to an embodiment of the present application, it can be seen from this figure that the service device comprises: a message receiving module, a processing module and a private call setting module, wherein
the message receiving module is arranged for receiving a first request message that is sent by a first communication device to request a private call with a second communication device;
the processing module is arranged for modifying conference media of a communication device having participated in the conference within the first and the second communication devices according to the received first request message;
and the private call setting module is arranged for establishing a private call between the first and the second communication device after the conference media is modified.

The service device further comprises a message forwarding module for forwarding the first request message to the second communication device;
the message receiving module is further arranged for receiving a second request message from the second communication device;
and the processing module is further arranged for modifying conference media of the communication device having participated in the conference within the first and the second communication devices according to the received second request message.

The service device further comprises:
a content shielding module for shielding the first and the second communication devices from a communication among the other communication devices participating in the conference, and/or shielding the other communication devices participating in the conference from a communication between the first and the second communication devices.

The message receiving module is further arranged for receiving a request message that is sent by the first communication device to request an exit from the private call with the second communication device;
and the processing module is further arranged for modifying conference media of the first and the second communication device according to the received request message requesting for an exit from the private call with the second communication device to make the first and the second communication devices return to the current conference.

The service device further comprises:
a calling module for sending a calling message to the second communication device in the case where the first and the second communication devices are not in the same conference;
the message receiving module is further arranged for receiving a response made by the second communication device to the call message;
and the processing module is further arranged for establishing a private call between the first and the second communication devices according to the received response.

The message receiving module is further arranged for receiving a private call exit request message that is sent by the first communication device;
and the processing module is further arranged for releasing the second communication device when the private call exit request coming from the first communication device is accepted, and modifying conference media of the first communication device to make the first communication device return to the current conference.

The mentioned above is only preferred embodiments of the present application, it should be appreciated that various modifications and improvements can be devised by those skilled in the art without departing from the scope of the principles of this application, and that all the devised modifications and improvements belong to the scope of the protection of the claims.

## Claims

1. A method for realizing a private call during a conference in an IP multimedia subsystem, wherein the method comprises:
receiving (101), by a service device, a first request message that is sent by a first communication device having participated in the conference to request a private call with a second communication device;
determining (102), by the service device, whether or not the first and the second communication devices participate in the same conference;
when the first and the second communication devices are in the same conference, determining (103), by the service device, whether the first communication device is a communication device at a conference presider side or at a conference member side;
when the first communication device is the communication device at the conference presider side, modifying (106), by the service device, conference media of the first and the second communication devices, and establishing, by the service device, a private call between the first and the second communication device after the conference media is modified;
when the first communication device is the communication device at the conference member side, forwarding (104), by the service device, the first request message to the second communication device; receiving (105), by the service device, a second request message from the second communication device to request a private call with the first communication device, modifying, by the service device, conference media of the first and the second communication devices; and establishing, by the service device, the private call between the first and the second communication device after the conference media is modified;
when the first and the second communication devices are not in the same conference, modifying (107), by the service device, conference media of the first communication device; sending, by the service device, a calling request to the second communication device; and establishing (108), by the service device, the private call between the first and the second communication devices after the second communication device responds the calling request;
wherein the first request message and the second request message are REFER messages defined in RFC 3515;
wherein the modifying, by the service device, conference media of the communication device having participated in the conference within the first and the second communication devices comprises:
forbidding, by the service device, the first and the second communication devices to send information to the conference; and/or
forbidding, by the service device, the conference to send information to the first and the second communication devices.

2. The method according to claim 1, when the first and the second communication devices are in the same conference, further comprising:
receiving by the service device a request message that is sent by the first communication device to request an exit from the private call with the second communication device; and
modifying, by the service device, conference media of the first and the second communication devices to make the first and the second communication devices return to the current conference.

3. The method according to claim 1, when the first and the second communication devices are not in the same conference, further comprising:
receiving by the service device a request message that is sent by the first communication device to request an exit from the private call; and
after the service device accepts the private call exit request of the first communication device, releasing the second communication device by the service device, and modifying conference media of the first communication device by the service device to resume a communication between the first communication device and the prior conference.

4. A service device for realizing a private call during a conference in an IP multimedia subsystem, wherein the service device comprises: a message receiving module, a processing module, a private call setting module, a message forwarding module, a calling module, and a content shielding module, wherein
the message receiving module is arranged for receiving a first request message that is sent by a first communication device having participated in the conference to request a private call with a second communication device; determining, whether or not the first and the second communication devices participate in the same conference; when the first and the second communication devices are in the same conference, determining whether the first communication device is a communication device at a conference presider side or at a conference member side;
the message forwarding module for forwarding, when the first communication device is the communication device at the conference member side, the first request message to the second communication device; the message receiving module is further arranged for receiving a second request message from the second communication device to request a private call with the first communication device; the calling module for sending, when the first and the second communication devices are not in the same conference, a calling message to the second communication device;
the message receiving module is further arranged for receiving a response made by the second communication device to the call message;
the processing module is arranged for modifying, when the first and the second communication devices are in the same conference, conference media of the first and the second communication devices; and modifying, when the first and the second communication devices are not in the same conference, conference media of the first communication device;
the private call setting module is arranged for establishing a private call between the first and the second communication devices after the conference media is modified;
wherein the first request message and the second request message are REFER messages defined in RFC 3515; the content shielding module for forbidding the first and the second communication devices to send information to the conference; and/or forbidding the conference to send information to the first and the second communication devices.

5. The service device according to claim 4, wherein, when the first and the second communication devices are in the same conference,
the message receiving module is further arranged for receiving a request message that is sent by the first communication device to request an exit from the private call with the second communication device;
and the processing module is further arranged for modifying conference media of the first and the second communication devices according to the received request message requesting for an exit from the private call with the second communication device to make the first and the second communication devices return to the current conference.

6. The service device according to claim 4, wherein, when the first and the second communication devices are not in the same conference,
the message receiving module is further arranged for receiving a request message that is sent by the first communication device to request an exit from the private call;
and the processing module is further arranged for releasing the second communication device when the request of the first communication device for an exit from the private call is accepted, and modifying conference media of the first communication device to make the first communication device return to the current conference.

## Patentansprüche

1. Verfahren zum Realisieren eines Privatrufs während einer Konferenz in einem IP-Multimedia-Subsystem, wobei das Verfahren Folgendes umfasst:
Empfangen (101) durch eine Dienstvorrichtung einer ersten Anfragenachricht, die von einer ersten Kommunikationsvorrichtung gesendet wird, welche an der Konferenz teilgenommen hat, um einen Privatruf mit einer zweiten Kommunikationsvorrichtung anzufragen;
Bestimmen (102) durch die Dienstvorrichtung, ob die erste und die zweite Kommunikationsvorrichtung an derselben Konferenz teilnehmen;
wenn die erste und die zweite Kommunikationsvorrichtung sich in derselben Konferenz befinden, Bestimmen (103) durch die Dienstvorrichtung, ob die erste Kommunikationsvorrichtung eine Kommunikationsvorrichtung auf einer Konferenzvorsitzseite oder auf einer Konferenzteilnehmerseite ist;
wenn die erste Kommunikationsvorrichtung die Kommunikationsvorrichtung auf der Konferenzvorsitzseite ist, Modifizieren (106) von Konferenzmedien der ersten und der zweiten Kommunikationsvorrichtung durch die Dienstvorrichtung und Einrichten eines Privatrufs zwischen der ersten und der zweiten Kommunikationsvorrichtung durch die Dienstvorrichtung, nachdem die Konferenzmedien modifiziert wurden;
wenn die erste Kommunikationsvorrichtung die Kommunikationsvorrichtung auf der Konferenzteilnehmerseite ist, Weiterleiten (104) der ersten Anfragenachricht an die zweite Kommunikationsvorrichtung durch die Dienstvorrichtung; Empfangen (105) einer zweiten Anfragenachricht von der zweiten Kommunikationsvorrichtung durch die Dienstvorrichtung, um einen Privatruf mit der ersten Kommunikationsvorrichtung anzufragen, Modifizieren von Konferenzmedien der ersten und der zweiten Kommunikationsvorrichtung durch die Dienstvorrichtung und Einrichten des Privatrufs zwischen der ersten und der zweiten Kommunikationsvorrichtung durch die Dienstvorrichtung, nachdem die Konferenzmedien modifiziert wurden;
wenn die erste und die zweite Kommunikationsvorrichtung sich nicht in derselben Konferenz befinden, Modifizieren (107) von Konferenzmedien der ersten Kommunikationsvorrichtung durch die Dienstvorrichtung; Senden einer Rufanfrage an die zweite Kommunikationsvorrichtung durch die Dienstvorrichtung und Einrichten (108) des Privatrufs zwischen der ersten und der zweiten Kommunikationsvorrichtung durch die Dienstvorrichtung, nachdem die zweite Kommunikationsvorrichtung auf die Rufanfrage reagiert;
wobei die erste Anfragenachricht und die zweite Anfragenachricht REFER-Nachrichten, definiert in RFC 3515, sind;
wobei das Modifizieren von Konferenzmedien der Kommunikationsvorrichtung, die an der Konferenz teilgenommen hat, in der ersten und der zweiten Kommunikationsvorrichtung durch die Dienstvorrichtung Folgendes umfasst:
Verhindern durch die Dienstvorrichtung, dass die erste und die zweite Kommunikationsvorrichtung Informationen an die Konferenz senden; und/oder
Verhindern durch die Dienstvorrichtung, dass die Konferenz Informationen an die erste und die zweite Kommunikationsvorrichtung sendet.

2. Verfahren nach Anspruch 1, ferner, wenn sich die erste und die zweite Kommunikationsvorrichtung in derselben Konferenz befinden, Folgendes umfassend:
Empfangen durch die Dienstvorrichtung einer Anfragenachricht, die von der ersten Kommunikationsvorrichtung gesendet wird, um einen Austritt aus dem Privatruf mit der zweiten Kommunikationsvorrichtung anzufragen; und
Modifizieren von Konferenzmedien der ersten und der zweiten Kommunikationsvorrichtung durch die Dienstvorrichtung, um zu bewirken, dass die erste und die zweite Kommunikationsvorrichtung zur aktuellen Konferenz zurückkehren.

3. Verfahren nach Anspruch 1, ferner, wenn sich die erste und die zweite Kommunikationsvorrichtung nicht in derselben Konferenz befinden, Folgendes umfassend:
Empfangen durch die Dienstvorrichtung einer Anfragenachricht, die von der ersten Kommunikationsvorrichtung gesendet wird, um einen Austritt aus dem Privatruf anzufragen; und
nachdem die Dienstvorrichtung die Anfrage nach einem Austritt aus dem Privatruf der ersten Kommunikationsvorrichtung akzeptiert hat, Freigeben der zweiten Kommunikationsvorrichtung durch die Dienstvorrichtung und Modifizieren von Konferenzmedien der ersten Kommunikationsvorrichtung durch die Dienstvorrichtung, um eine Kommunikation zwischen der ersten Kommunikationsvorrichtung und der vorherigen Konferenz wiederaufzunehmen.

4. Dienstvorrichtung zum Realisieren eines Privatrufs während einer Konferenz in einem IP-Multimedia-Subsystem, wobei die Dienstvorrichtung Folgendes umfasst: ein Nachrichtenempfangsmodul, ein Verarbeitungsmodul, ein Privatruf-Einstellungsmodul, ein Nachrichtenweiterleitungsmodul, ein Rufmodul und ein Inhaltsabschirmungsmodul, wobei
das Nachrichtenempfangsmodul angeordnet ist zum Empfangen einer ersten Anfragenachricht, die von einer ersten Kommunikationsvorrichtung gesendet wird, welche an der Konferenz teilgenommen hat, um einen Privatruf mit einer zweiten Kommunikationsvorrichtung anzufragen; zum Bestimmen, ob die erste und die zweite Kommunikationsvorrichtung an derselben Konferenz teilnehmen oder nicht; wenn sich die erste und die zweite Kommunikationsvorrichtung in derselben Konferenz befinden, zum Bestimmen, ob die erste Kommunikationsvorrichtung eine Kommunikationsvorrichtung auf einer Konferenzvorsitzseite oder auf einer Konferenzteilnehmerseite ist;
das Nachrichtenweiterleitungsmodul zum Weiterleiten der ersten Anfragenachricht an die zweite Kommunikationsvorrichtung, wenn die erste Kommunikationsvorrichtung die Kommunikationsvorrichtung auf der Konferenzteilnehmerseite ist; das Nachrichtenempfangsmodul ferner angeordnet ist zum Empfangen einer zweiten Anfragenachricht von der zweiten Kommunikationsvorrichtung, um einen Privatruf mit der ersten Kommunikationsvorrichtung anzufragen;
das Rufmodul zum Senden einer Rufnachricht an die zweite Kommunikationsvorrichtung, wenn sich die erste und die zweite Kommunikationsvorrichtung nicht in derselben Konferenz befinden;
das Nachrichtenempfangsmodul ferner angeordnet ist zum Empfangen einer Antwort auf die Rufnachricht, die von der zweiten Kommunikationsvorrichtung gegeben wird;
das Verarbeitungsmodul angeordnet ist zum Modifizieren von Konferenzmedien der ersten und der zweiten Kommunikationsvorrichtung, wenn sich die erste und die zweite Kommunikationsvorrichtung in derselben Konferenz befinden; und zum Modifizieren von Konferenzmedien der ersten Kommunikationsvorrichtung, wenn sich die erste und die zweite Kommunikationsvorrichtung nicht in derselben Konferenz befinden;
das Privatruf-Einstellungsmodul angeordnet ist zum Einrichten eines Privatrufs zwischen der ersten und der zweiten Kommunikationsvorrichtung, nachdem die Konferenzmedien modifiziert wurden;
wobei die erste Anfragenachricht und die zweite Anfragenachricht REFER-Nachrichten, definiert in RFC 3515, sind;
das Inhaltsabschirmungsmodul zum Verhindern, dass die erste und die zweite Kommunikationsvorrichtung Informationen an die Konferenz senden; und/oder zum Verhindern, dass die Konferenz Informationen an die erste und die zweite Kommunikationsvorrichtung sendet.

5. Dienstvorrichtung nach Anspruch 4, wobei, wenn sich die erste und die zweite Kommunikationsvorrichtung in derselben Konferenz befinden,
das Nachrichtenempfangsmodul ferner angeordnet ist zum Empfangen einer Anfragenachricht, die von der ersten Kommunikationsvorrichtung gesendet wird, um einen Austritt aus dem Privatruf mit der zweiten Kommunikationsvorrichtung anzufragen;
und das Verarbeitungsmodul ferner angeordnet ist zum Modifizieren von Konferenzmedien der ersten und der zweiten Kommunikationsvorrichtung gemäß der empfangenen Anfragenachricht, die einen Austritt aus dem Privatruf mit der zweiten Kommunikationsvorrichtung anfragt, um zu bewirken, dass die erste und die zweite Kommunikationsvorrichtung zur aktuellen Konferenz zurückkehren.

6. Dienstvorrichtung nach Anspruch 4, wobei, wenn sich die erste und die zweite Kommunikationsvorrichtung nicht in derselben Konferenz befinden,
das Nachrichtenempfangsmodul ferner angeordnet ist zum Empfangen einer Anfragenachricht, die von der ersten Kommunikationsvorrichtung gesendet wird, um einen Austritt aus dem Privatruf anzufragen;
und das Verarbeitungsmodul ferner angeordnet ist zum Freigeben der zweiten Kommunikationsvorrichtung, wenn die Anfrage der ersten Kommunikationsvorrichtung nach einem Austritt aus dem Privatruf akzeptiert wurde, und zum Modifizieren von Konferenzmedien der ersten Kommunikationsvorrichtung, um zu bewirken, dass die erste Kommunikationsvorrichtung zu der aktuellen Konferenz zurückkehrt.

## Revendications

1. Procédé de réalisation d'un appel privé en conférence dans un sous-système multimédia IP, dans lequel ledit procédé comprend :
la réception (101), par un dispositif de service, d'un premier message de demande envoyé par un premier dispositif de communication ayant participé à la conférence, pour demander un appel privé avec un second dispositif de communication ;
la détermination (102), par le dispositif de service, si le premier et le second dispositif de communication participent ou non à la même conférence ;
lorsque le premier et le second dispositif de communication sont dans la même conférence, la détermination (103), par le dispositif de service, si le premier dispositif de communication est un dispositif de communication côté modérateur de la conférence ou côté intervenant de la conférence ;
lorsque le premier dispositif de communication est le dispositif de communication côté modérateur de la conférence, la modification (106), par le dispositif de service, du support de conférence du premier et du second dispositif de communication ; et l'établissement, par le dispositif de service, d'un appel privé entre le premier et le second dispositif de communication après la modification du support de conférence ;
lorsque le premier dispositif de communication est le dispositif de communication côté intervenant de la conférence, le transfert (104), par le dispositif de service, du premier message de demande au second dispositif de communication ; la réception (105), par le dispositif de service, d'un second message de demande du second dispositif de communication pour demander un appel privé avec le premier dispositif de communication ; la modification, par le dispositif de service, du support de conférence du premier et du second dispositif de communication ; et l'établissement, par le dispositif de service, de l'appel privé entre le premier et le second dispositif de communication après la modification du support de conférence ;
lorsque le premier et le second dispositif de communication ne sont pas dans la même conférence, la modification (107), par le dispositif de service, du support de conférence du premier dispositif de communication ; l'envoi, par le dispositif de service, d'une demande d'appel au second dispositif de communication ; et l'établissement (108), par le dispositif de service, de l'appel privé entre le premier et le second dispositif de communication, après la réponse du second dispositif de communication à la demande d'appel ;
dans lequel le premier message de demande et le deuxième message de demande sont des messages REFER définis dans la RFC 3515 ;
dans lequel la modification, par le dispositif de service, du support de conférence du dispositif de communication ayant participé à la conférence en tant que premier et second dispositif de communication comprend :
l'interdiction, par le dispositif de service au premier et au second dispositif de communication, d'envoyer des informations à la conférence ; et/ou
l'interdiction, par le dispositif de service à la conférence, d'envoyer des informations au premier et au second dispositif de communication.

2. Procédé selon la revendication 1, lorsque le premier et le second dispositif de communication sont dans la même conférence, comprenant en outre :
la réception, par le dispositif de service, d'un message de demande envoyé par le premier dispositif de communication pour demander la sortie de l'appel privé avec le second dispositif de communication ; et
la modification, par le dispositif de service, du support de conférence du premier et du second dispositif de communication, pour que le premier et le second dispositif de communication retournent à la conférence en cours.

3. Procédé selon la revendication 1, lorsque le premier et le second dispositif de communication ne sont pas dans la même conférence, comprenant en outre :
la réception, par le dispositif de service, d'un message de demande envoyé par le premier dispositif de communication pour demander la sortie de l'appel privé ; et
après l'acceptation par le dispositif de service de la demande de sortie de l'appel privé du premier dispositif de communication, la déconnexion du second dispositif de communication par le dispositif de service ; et la modification du support de conférence du premier dispositif de communication par le dispositif de service pour reprendre une communication entre le premier dispositif de communication et la conférence antérieure.

4. Dispositif de service pour la réalisation d'un appel privé en conférence dans un sous-système multimédia IP, dans lequel ledit dispositif de service comprend :
un module de réception de message, un module de traitement, un module d'établissement d'appel privé, un module de transmission de message, un module d'appel et un module de protection de contenu, dans lequel
le module de réception de message est conçu pour recevoir un premier message de demande, envoyé par un premier dispositif de communication ayant participé à la conférence, pour demander un appel privé avec un second dispositif de communication ; la détermination si le premier et le second dispositif de communication participent ou non à la même conférence ; lorsque le premier et le second dispositif de communication sont dans la même conférence, la détermination si le premier dispositif de communication est un dispositif de communication côté modérateur de la conférence ou côté intervenant de la conférence ;
le module de transmission de message, conçu pour transmettre, lorsque le premier dispositif de communication est le dispositif de communication côté intervenant de la conférence, le premier message de demande au second dispositif de communication ; le module de réception de message est en outre configuré pour recevoir un second message de demande envoyé par le second dispositif de communication, pour demander un appel privé avec le premier dispositif de communication ;
le module d'appel, conçu pour envoyer, lorsque le premier et le second dispositif de communication ne sont pas dans la même conférence, un message d'appel au second dispositif de communication,
le module de réception de message est en outre configuré pour recevoir une réponse du second dispositif de communication au message d'appel ;
le module de traitement est conçu pour modifier, lorsque le premier et le second dispositif de communication sont dans la même conférence, le support de conférence du premier et du second dispositif de communication ; et modifier, lorsque le premier et le second dispositif de communication ne sont pas dans la même conférence, le support de conférence du premier dispositif de communication ;
le module d'établissement d'appel privé est conçu pour établir un appel privé entre le premier et le second dispositif de communication, après la modification du support de conférence ;
dans lequel le premier message de demande et le deuxième message de demande sont des messages REFER définis dans la RFC 3515 ;
le module de protection de contenu, conçu pour interdire au premier et au second dispositif de communication l'envoi d'informations à la conférence ; et/ou interdire à la conférence l'envoi d'informations au premier et au second dispositif de communication.

5. Dispositif de service selon la revendication 4, dans lequel, lorsque le premier et le second dispositif de communication sont dans la même conférence,
le module de réception de message est en outre configuré pour recevoir un message de demande envoyé par le premier dispositif de communication, pour demander la sortie de l'appel privé avec le second dispositif de communication ;
et le module de traitement est en outre configuré pour modifier le support de conférence du premier et du second dispositif de communication, en fonction du message de demande reçu, demandant la sortie de l'appel privé avec le second dispositif de communication, pour que le premier et le second dispositif de communication retournent à la conférence en cours.

6. Dispositif de service selon la revendication 4, dans lequel, lorsque le premier et le second dispositif de communication ne sont pas dans la même conférence,
le module de réception de message est en outre configuré pour recevoir un message de demande envoyé par le premier dispositif de communication, pour demander la sortie de l'appel privé ;
et le module de traitement est en outre configuré pour déconnecter le second dispositif de communication lorsque la demande de sortie de l'appel privé par le premier dispositif de communication est acceptée, et modifier le support de conférence du premier dispositif de communication, pour que le premier dispositif de communication retourne à la conférence en cours.
